# EUROPÄISCHE PATENTANMELDUNG

(11) **EP 0 669 539 A1**
(43) Veröffentlichungstag der Anmeldung: **30.08.1995**
(21) Anmeldenummer: 94906414.1
(22) Anmeldetag: 04.02.1994
(51) Int. Cl.: G01S 13/93

(54) **VERFAHREN UND VORRICHTUNG ZUR VERHINDERUNG VON ZUSAMMENSTÖSSEN ZWISCHEN FAHRZEUGEN**

(30) Priorität: 03.09.1993 WO PCT/RU93/00213
(71) Anmelder: Konstruktorskoe Bjuro Mashinostroenia, Moskovskaya obl., Kolomna, 140402 (RU)
(72) Erfinder: SEMILETNIKOV, Viktor Pavlovich, Moskovskaya obl. Kolomna, 140406 (RU); GUSCHIN, Nikolay Ivanovich, Moskovskaya obl. Kolomna, 140400 (RU); VOSKRESENSKY, Sergei Vitalievich, Moskovskaya obl. Kolomna, 140404 (RU); KASHIN, Valery Mikhailovich, Moskovskaya obl. Kolomna, 140406 (RU); ILCHENKO, Alexandr Ivanovich, Moskovskaya obl. Kolomna, 140404 (RU); STULOV, Valentin Alenxandrovich, Moskovskaya obl. Kolomna, 140406 (RU); ZORIN, Andrei Viktorovich, Moskovskaya obl. Kolomna, 140406 (RU); CHVYREVA, Irina Vyacheslavovna, Moskovskaya obl. Kolomna, 140402 (RU)
(74) Vertreter: Prechtel, Jörg, Dipl.-Phys. Dr.
(86) Internationale Anmeldenummer: RU9400019
(87) Internationale Veröffentlichungsnummer: WO9506884

(57) **Zusammenfassung**

Die Erfindung betrifft die Radarsysteme für die Systeme zur Aufprallverhütung des Transportmittels. Das erfindungsmäßige Verfahren umfaßt die Formierung des abtastenden frequenzmodulierten Höchstfrequenzsignals, den Empfang des Rückstrahlsignals, die Erzeugung der Zwischenfrequenz, die Speicherung der Informationen über die Objekte in der Entdeckungszone, die Analyse der relativen Annäherungsgeschwindigkeit, die Benachrichtigung des Fahrers über den möglichen Aufprall des Transportmittels. Um die Sicherheit des Transportmittels zu erhöhen, werden die vom Objekt in der Entdekkungszone reflektierten und auf der Zwischenfrequenz erzeugten Signale auf die zweite konstante Zwischenfrequenz überlagert, die Signale der zweiten Zwischenfrequenz analysiert, die Informationen über das Vorhandensein der Objekte in der Entdekkungszone abgetrennt, die Signale über die mögliche Kollision des Transportmittels abhängig von der Eigengeschwindigkeit nach der Bestimmung der relativen Annäherungsgeschwindigkeit erzeugt.

Die Vorrichtung zur Aufprallverhütung des Transportmittels weist auf eine Antennen- und Antennenspeiseleitungsbaugruppe, einen Mikrowellengenerator, einen Modulator, einen Wobbelfrequnezgenerator, in Reihe aneinander Geschaltete: einen Mischer, einen Vorverstärker der Zwischenfrequenz, ein Bandfilter, einen Umschalter, sowie ein Summator, ein Niederfrequenzfilter, in Reihe aneinander Geschaltete: einen Generator der Referenspannung und einen Impulsformer, einen Verstärker der Zwischenfrequenz, in Reihe aneinander Geschaltete: ein Schmalbandfilter und einen Detektor, einen Verstärker, dabei ist der Heterodyneingang des Empfängermischers über den Richtkoppler an den Ausgang des Mikrowellengenerators geschaltet, der zweite Ausgang des Richtkopplers ist an den Eingang der Antennen- und Antennenspeiseleitungsbaugruppe, der Signaleingang des Mischers an den Ausgang der Antennen- und Antennenspeiseleitungsbaugruppe geschaltet. An den Ausgang des Summtaors sind eine regulierbare Spannungsquelle,ein Umstellgenerator, ein zweiter Mischer hintereinandergeschaltet, dessen Signaleingang an den Ausgang des Verstärkers der Zwischenfrequenz und der Ausgang an den Eingang des Schmalbandfilters geschaltet sind.

Es gibt ein Blockschaltbild der Vorrichtung.

## Beschreibung

Fachgebiet der Technik.

Die Erfindung betrifft die Radarsysteme vorzugsweise für die Systeme zur Aufprallverhütung des Transportmittels.

Bisheriger Stand der Technik.

Es ist eine Radarvorrichtung zur Aufprallverhütung der Transportmittel (siehe, z.B. USA-Patent # 4916450) bekannt.

Diese bekannte Vorrichtung weist ein Radar mit frequenzmodulierter Dauerstrahlung auf, das Signale erzeugt, die dem Abstand zwischen einem Transportmittel und einem bestimmten Objekt und deren Annährungsgeschwindigkeit entsprechen. Das Transportmittel hat eine Einrichtung, die ein der Fahrgeschwindigkeit des Transportmittels entsprechendes Signal erzeugt. Die Signale, die dem Abstand, der Annährungsgeschwindigkeit und der Fahrgeschwindigkeit des Transportmittels entsprechen, werden dem Signalprozessor des Radars zugeführt, der eine Vorrichtung für die Summierung der von ihr empfangenen Signalmomentanwerte und eine weitere, das Referenzsignal einer konstanten Einheitsgröße erzeugende Vorrichtung besitzt. Maximalwerte der Abstands-, Annährungsgeschwindigkeits- und Fahrgeschwindigkeitssignale sind ein bestimmtes Prozent von der Größe des Referenzsignals. Wenn das Ausgangssignal der Summierungsvorrichtung übersteigt die Größe des Referenzsignals, erzeugt der Prozessor ein Ausgangsalarmsignal.

Die bekannte Vorrichtung weist jedoch keine Entfernungsauflösung auf, was ihre Arbeit in den schweren Fahrbedingungen begrenzt, und in diesem Zusammenhang wird die Wahrscheinlichkeit der Entdeckung der gefährlichen Objekte verringert.

Der Prototyp der angemeldeten Erfindung ist das am Kraftwagen angebrachte Radarsystem zur Aufprallverhütung gemäß der französischen Patentanmeldung #2171961.

Die erwähnte Erfindung hat eine Ausgabeeinheit für die Anzeige, einen Modulationsfrequenzgenerator, der einen die Senderfrequenz periodisch modulierenden Generator, einen diese Frequenz auf dem gegebenem Niveau haltenden Generator und eine Kommutationsschaltung, sowie in Reihenschaltung an den Ausgang des Senders einen Richtkoppler, ein Zirkulator, Empfangs- und Sendeantenne und einen Mischer, dessen Heterodyneingang an den zweiten Ausgang des Richtkopplers und der Signaleingang an den Zirkulatorausgang geschaltet ist, und auch eine Entfernungsmeßeinheit, die die Signalschwebungsfrequenz aus dem Mischerausgang mißt.

Der Nachteil des Prototypes liegt hier in der Anwendung der Umschaltung des Arbeitszustandes des Sendergenerators, in der Anwendung einer einzigen Antenne und eines Zirkulators, was den dynamischen Bereich der Arbeitsentfernungen des Systems verringert, die Empfindlichkeit des Senders verschlechtert und die Reichweite des Systems in seiner Gesammtheit begrenzt.

Offenbarung der Erfindung.

Ziel der Erfindung ist, die Verkehrssicherheit eines Transportmittels zu erhöhen. Dieses Ziel wird durch Überlagerung der vom Objekt in der Entdekkungszone zurückgestrahlten und auf der Zwischenfrequenz formierten Signale auf die zweite konstante Zwischenfrequenz, durch Signalanalyse der zweiten Zwischenfrequenz, Abtrennung der Informationen über das Vorhandensein der Objekte in der Entdeckungszone, Erzeugung der Signale über den möglichen Aufprall des Transportmittels nach der Bestimmung der relativen Annährungsgeschwindigkeit und je nach der Eigengeschwindigkeit des Transportmittels erreicht.

Im Unterschied zum Prototyp werden die Signale der Zwischenfrequenz mit den Signalen der sprunghaft sich verändernden Frequenzen überlagert, die den rechnerischen Entfernungsgrößen entsprechen, dabei werden aus den Signalen der zweiten Zwischenfrequenz, die dem analysierten Raum entsprechen, zwei Kanäle - nach geradzahligen und ungeradzahligen Entdeckungsgürteln - gebildet, die Signale der geradzahligen und ungeradzahligen Gürtel verglichen und das Signal mit der Maximalamplitude abgetrennt, nach welchem über das Vorhandensein der Objekte in der Entdekkungszone geurteilt wird. Nach der Entdeckung eines Objektes werden die näheren Gürtel aufeinanderfolgend, darunter auch der Gürtel mit dem entdeckten Objbekt abgefragt, und ein Signal über den möglichen Aufprall wird erzeugt. Der Aufbau der Vorrichtung weist auch in Reihenschaltung an den Ausgang des Summators eine regulierbare Spannungsquelle,einen Umstellüberlagerer, den zweiten Mischer auf, dessen Signaleingang mit dem Ausgang des Zwischenfrequenzverstärkers und Ausgang mit dem Eingang des Schmalbandfilters geschaltet sind. Durch diesen Aufbau werden die sukzessive Abtastung des ganzen Raums der Entdeckungszone, sowie die automatische Regelung des Entdeckungsschwellenwertes und folglich die Entfernungsauflösung erreicht, die Entdekkungswahrscheinlichkeit des Objekts erhöht, die Selektion nur derjenigen Objekte in der Entdekkungszone ausgeführt, die mit dem Zusammenstoß mit dem Transportmittel drohen.

Kurze Beschreibung der Figuren der Zeichnungen.

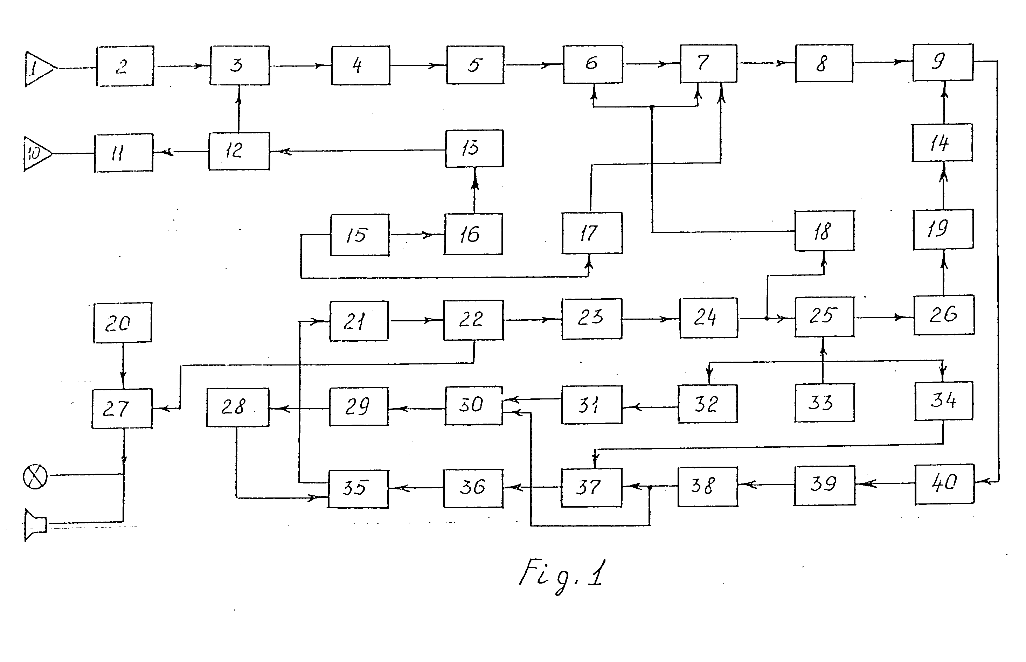

Figur 1 zeigt das Blockschaltbild des Aufbaus der Vorrichtung zur Aufprallverhütung des Transportmittels.

Ausführungsform der Erfindung.

Das erfindungsmäßige Verfahren zur Aufprallverhütung des Transportmittels schließt Operationen zur Formierung des abtastenden frequenzmodulierten Höchstfrequenzsignals, zum Empfang des vom Objekt in der Enteckungszone zurückgestrahlten Signals, zur Erzeugung der Zwischenfrequenz, zur Überlagerung der vom Objekt in der Entdekkungszone reflektierten und auf der Zwischenfrequenz erzeugten und Signale auf die zweite konstante Zwischenfrequenz, zur Analyse der Signale der zweiten Zwischenfrequenz, zur Abtrennung der Informationen über das Vorhandensein der Objekte in der Entdeckungszone, zur Messung der relativen Annährungsgeschwindigkeit und der Eigengeschwindigkeit, zur Erzeugung der Signale über die mögliche Kollision des Transportmittels ein.

An einem Ausführungsbeispiel der Vorrichtung wird das Verfahren zur Aufprallverhütung des Transportmittels erläutert.

Die Vorrichtung weist eine Antennen- und Antennenspeiseleitungsbaugruppe auf, die eine Sendeantenne 10 und eine Empfangsantenne 1 hat. Am Ausgang der Empfangsantenne 1 und am Eingang der Sendeantenne 10 sind Ventile 2, 11 angeordnet. Der Mikrowellengenerator 13 ist an den Mischer 3 und den Ventil 11 über einen Richtkoppler 12 geschaltet. Der Ausgang des Mischers 3, dessen Eingang mit dem Ventil 2 geschaltet ist, ist verknüpft mit den aneinander in Reihe Geschalteten: Vorverstärker 4 der Zwischenfrequenz, Bandfilter 5, Verstärkungsregler 6, Umschalter 7, dessen erster Steuereingang an den Strobimpulsformer 17, der an den zweiten Ausgang des Genenators 15 den Modulierungsfrequenz geschaltet ist, Verstärker 8 der Zwischenfrequenz, dem zweitem Mischer 9, Schmalbandfilter 40, Detektor 39, Verstärker 38, Signaleingang der ersten Einrichtung 37 der Auswahl und Speicherung, dem ersten Niederfrequenzfilter 36, dem ersten Eingang des Phasenkomparators 35. Der Signaleingang der zweiten Einrichtung 30 der Auswahl und Speicherung ist an den Ausgang des Verstärkers 38 geschaltet, und ihr Ausgang ist verknüpft mit den aneinander in Reihe Geschalteten: dem zweiten Niederfrequenzfilter 29, regulierbarem Folger 28, dem zweiten Eingang des Phasenkomparators 35, der Ausgang des Phasenkomparators 35 ist verknüpft mit den aneinander in Reihe Geschalteten: Speicher 21, Eingang des Messers 22 der Annäherungsgeschwindigkeit, dessen erster Ausgang mit dem ersten Eingang des Messers 27 des Bremsweges geschaltet ist, dessen Ausgang mit einem Licht- und einem Tonanzeiger geschaltet ist, der zweite Eingang des Messers 27 des Bremsweges ist an den Geber 20 der Eigengeschwindigkeit geschaltet, der zweite Ausgang des Messers 22 der Annäherungsgeschwindigkeit ist verknüpft mit den aneinander in Reihe Geschalteten: Gürtelformer 23, Register 24, dem ersten Eingang des binären Addiators 25, Digital/Analog-Wandler 26, regulierbarer Spannungsquelle 19, Umstellgenerator 14. Der Eingang der digitalen Schwellenwerteinrichtung 18 ist an den Ausgang des Registers 24 und ihr Ausgang an den Steuereingang des Verstärkungsreglers 6 und an den ersten Steuereingang des Umschalters 7 geschaltet. Der Generator 33 der Referenzspannung ist an den zweiten Eingang des binären Addiators 25, den Inverter 32 und den ersten Impulsformer 34 geschaltet, dessen Ausgang an den Steuereingang der ersten Einrichtung 37 der Auswahl und Speicherung geschaltet ist, der Ausgang des Inverters 32 ist an den zweiten Impulsformer 31 geschaltet, der an den Steuereingang der zweiten Einrichtung 30 der Auswahl und Speicherung geschaltet ist. Der erste Ausgang des Generators 15 der Modulierungsfrequenz ist an den Modulator 16 geschaltet, dessen Ausgang an den Mikrowellegenerator 13 geschaltet ist.

Die Vorrichtung funktioniert wie folgt:
In der vorliegenden Vorrichtung wird die Frequenz des Signals der Zwischenfrequenz aufwärts auf eine konstante Frequenz übertragen und, um die Frequenzversetzung des Signals am Ausgang des Verstärkers 8 der Zwischenfrequenz infolge der Änderung der Entfernung bis zum Objekt auszugleichen, wird die Verschiebungsfrequenz des Umstellgenerators 14 verändert. Dabei ist die Modulationsfrequenz des Mikrowellengenerators 13 ist konstant über den ganzen Bereich der Arbeitsentfernungen, und, folglich, hängt die Zone der Entfernungsauflösung vom Abstand bis zum Objekt nicht ab. Am Eingang des Phasenkomparators 35 - für die Anpassung an die Inhomogenität des Rauschhintergrundes auf der Fahrspur - werden die Signale verglichen, die von den Raumgebieten, abgetrennt voneinander auf die dem Maxiamalwert aus der Zone der Entfernungsauflösung und der mittleren Länge des Objekts entsprechende Größe, zurückgestrahlt werden. Um das Signal/Rausch - Verhältnis auf kurzen Entfernungen zu erhöhen, wird das Geräusch auf der Modulationsfrequenz durch die Strobierung des Signals auf der Zwischenfrequenz über den Umschalter 7 während der Ühergangsprozesse der Modulation vermindert. Je nach der Größe der Steuerspannung am Eingang der regulierbaren Spannungsquelle 19, die durch die Summe der Spannung vom Ausgang des Generators 33 der Referenzspannung und der Spannung des Steuersignals vom Ausgang des Gürtelformers 23 bestimmt wird, erzeugt der Umstellgenerator 14 ein Signal mit solcher Frequenz, die erforderlich ist, damit das vom Objekt in der Zone der Entfernungsauflösung zurückgestrahlte Slgnal durch die Antennen- und Antennenspeiseleitungsbaugruppe 1, 2 und den Empfangsweg 3-9, 13-19, 25, 26 in den Durchlaßbereich des Schmalbandfilters 40 läuft, dabei ist die Mittendurchlaßfrequenz des Filters ist höher als die Zwischenfrequenz um die Frequenz des Umstellgenerators 14. Nach der Demodulation durch den Detector 39 und Verstärkung durch den Verstärker 38 kommt das Signal über den regulierbaren Folter 28 in den Phasenkomparator 35. Zwecks der Anpassung an der Brummpegel speichern die erste und die zweite Einrichttung der Auswahl und Speicherung 37, 30 die Werte der Signale vom Objekt in einer Auflösungszone bzw. das Verkehrsgeräusch in einer anderen Auflösungszone. Die durch das erste und das zweite Niederfrequenzfilter 36, 29 gefilterten und nach der Verstärkung durch den regulierbaren Folter 28 geregelten Signale kommen zu den Eingängen des Phasenkomparators 35, an dessen Ausgang ein Signal erzeugt wird, wenn das Slgnal in einem Kanal das Signal im anderen Kanal übersteigt. Um den dynamischen Bereich zu erweitern, hat die Vorrichtung einen Verstärkungsregler 6, der beim Ansprechen der digitalen Schwellenwerteinrichtung 18 den Verstärkungsfaktor des Signals vom Objekt, das sich auf kurzen Entfernungen befindet, herabsetzt. Wenn ein Objekt in der Entdeckungszone auftaucht, wird am Ausgang des Phasenkomparators 35 ein Slgnal erzeugt, das durch den Speicher 21 registriert und über den Messer 22 der Annäherungsgeschwindigkeit in den Gürtelformer eingegeben wird. Der Gürtelformer tastet alle Gürtel in den Betriebszustand der Entdeckung ab und bei der Erscheinung des Signals vom Speicher 21 tastet er die näheren Gürtel, einschließlich dessen, in welchem das Objekt aufgefaßt wurde, ab. Wenn das Objekt seine Lage in bezug auf die Entfernung verändert, so wird der fernere Gürtel der Abtastung verlegt und der Messer 22 der Annäherungsgeschwindigkeit stellt Berechnungen an. Das Berechnungsresultat, sowie das Signal aus dem Geber 20 der Eigengeschwindigkeit gehen in den Messer 27 des Bremsweges, welcher über die Ausgabe der Informationen vom kollisionsgefährlichen Objekt entscheidet.

Gewerbliche Anwendbarkeit.

Das vorliegende Verfahren und die Vorrichtung sind realisierbar auf der von der Industrie hergestellten Elementenbasis. Das Versuchsmuster der Vorrichtung ist im Konstruktionsbüro für Maschinenbau hergestellt und hat die Labor- und Prüfstandserprobunden bestanden, nach deren Ergebnissen die notwendigen Änderungen vorgenommen worden sind. Das Versuchsmuster der Vorrichtung ist in einem Kraftwagen angebracht worden und hat allseitige Erprobungen beim Straßenverkehr bestanden. Als Ergebnis der Erprobunden ist festgestellt worden, daß das vorliegende Gerät für die Massenherstellung empfohlen werden kann. Daraus ergibt sich, daß die vorliegende Erfindung gewerblich anwendbar ist.

## Patentansprüche

1. Verfahren zur Aufprallverhütung des Transportmittels, das die Formierung des abtastenden frequenzmodulierten Höchstfrequenzsignals, den Empfang des Rückstrahlsignals, die Erzeugung der Zwischenfrequenz, die Speicherung der Informationen über die Objekte in der Entdeckungszone, die Analyse der relativen Annäherungsgeschwindigkeit,die Benachrichtigung des Fahrers über den möglichen Aufprall des Transportmittels einschließt, dadurch gekennzeichnet, daß die vom Objekt in der Entdeckungszone reflektierten und auf der Zwischenfrequenz erzeugten Signale auf die zweite konstante Zwischenfrequenz überlagert, die Signale der zweiten Zwischenfrequenz analysiert, die Informationen über das Vorhandensein der Objekte in der Entdeckungszone abgetrennt, die Signale über die mögliche Kollision des Transportmittels abhängig von seiner Eigengeschwindigkeit nach der Bestimmung der relativen Annäherungsgeschwindigkeit erzeugt werden.

2. Verfahren nach Anspruch 1 dadurch gekennzeichnet, daß die Signale der ersten Zwischenfrequenz mit den Signalen der sich sprunghaft verändernden Frequenzen überlagert werden, die den berechnete Entfernungswerten entsprechen.

3. Verfahren nach Anspruch 1 dadurch gekennzeichnet, daß aus den dem analysierten Raum entsprechenden Signalen der zweiten Zwischenfrequenz zwei Kanäle nach den geradzahligen und ungeradzahligen Gürteln der Entdeckung gebildet, die Signale der geradzahligen und ungeradzahligen Gürtel verglichen und das Signal mit der Maximalamplitude abgetrennt wird, nach welchem über das Vorhandensein eines Objekts in der Entdeckungszone geurteilt wird.

4. Verfahren nach Anspruch 1 dadurch gekennzeichnet, daß nach der Entdeckung des Objekts die näheren Gürtel einschließlich des Gürtels mit dem entdeckten Objekt nacheinander abgefragt und ein Signal über die mögliche Kollision des Transportmittels der relativen Annäherungsgeschwindigkeit und der Eigengeschwindigkeit gemäß erzeugt wird.

5. Vorrichtung zur Aufprallverhütung des Transportmittels, die eine Antennen- und Antennenspeiseleitungsbaugruppe, einen Mikrowellengenerator, einen Modulator, einen Generator der Modulierungsfrequenz, in Reihenschaltung einen Mischer, einen Vorverstärker der Zwischenfrequenz, ein Bandfilter, sowie einen Summator, ein Niederfrequenzfilter, in Reihenschaltung einen Generator der Referenzspannung und einen Impulsformer, einen Verstärker der Zwischenfrequenz, in Reihenschaltung ein Schmalbandfilter und einen Detektor, einen Verstärker aufweist, dabei ist der Heterodyneingang des Empfängermischers über den Richtkoppler an den Ausgang des Mikrowellengenerators geschaltet, der zweite Ausgang des Richtkopplers ist an den Eingang der Antennen- und Antennenspeiseleitungsbaugruppe, der Signaleingang des Mischers an den Ausgang der Antennen- und Antennenspeiseleitungsbaugruppe geschaltet, dadurch gekennzeichnet, daß die Vorrichtung in Reihenschaltung an den Ausgang des Summators eine regulierbare Spannungsquelle, einen Umstellgenerator, einen zweiten Mischer, dessen Signaleingang an den Ausgang des Verstärkers der Zwischenfrequenz und der Ausgang an der Eingang des Schmalbandfilters geschaltet ist, aufweist.

6. Vorrichtung zur Aufprallverhütung des Transportmittels nach Anspruch 5 dadurch gekennzeichnet, daß eine digitale Schwellenwerteinrichtung und ein Verstärkungsregler hintereinandergeschaltet eingeführt sind, und der Summator als ein Register, ein binärer Addiator, ein Digital/Analog - Wandler in Reihenschaltung ausgebildet ist, der Ausgang des Digital/Analog-Wandlers ist dabei an den Eingang der regulierbaren Spannungsquelle, der Eingang des Verstärkungsregler an den Ausgang des Bandfilters und der Ausgang an den Eingang des Verstärkers der Zwischenfrequenz gaschaltet, der Eingang der digitalen Schwellenwerteinrichtung ist an den Ausgang des Registers geschaltet.

7. Vorrichtung zur Aufprallverhütung des Transportmittels nach Anspruch 5 dadurch gekennzeichnet, daß ein Strobimpulsformer und ein Umschalter hintereinandergaschaltet eingeführt sind und der Generator der Modulierungsfrequenz einen Generator der Rechteckimpulse aufweist, dessen Ausgang an den Eingang des Strobimpulsformers geschaltet ist, der Eingang des Umschalters ist an den Ausgang des Bandfilters, und der Ausgang an den Eingang des Verstärkers der Zwischenfrequenz geschaltet ist.

8. Vorrichtung zur Aufprallverhütung des Transportmittels nach Anspruch 5 dadurch gekennzeichnet, daß eine digitale Schwellenwerteinrichtung, ein Strobimpulsformer, in Reihenschaltung an den Ausgang des Bandfilters ein Verstärkungsregler und ein Umschalter eingeführt sind, und der Generator der Modulierungsfrequenz weist dabei einen Generator der Rechteckimpulse auf, der über den Strobimpulsformer an den Steuereingang des Umschalters geschaltet ist, der Summator ist ausgebildet als ein Register, ein binärer Addiator, ein Digital/Analog-Wandler in Reihenschaltung, der Ausgang des Registers ist an den Eingang der digitalen Schwellenwerteinrichtung geschaltet, deren Ausgang an den Steuereingang des Verstärkungsreglers geschaltet ist, der Ausgang des Umschalters ist an den Eingang des Verstärkers der Zwischenfrequenz geschaltet.

9. Vorrichtung zur Aufprallverhütung des Transportmittels nach Anspruch 5 dadurch gekennzeichnet, daß die erste Einrichtung der Auswahl und Speicherung, in Reihenschaltung ein Inverter, der zweite Impulsformer, die zweite Einrichtung der Auswahl und der Speicherung, der zweite Niederfrequenzfilter, ein regulierbarer Folger, ein Phasenkomparator eingeführt sind, dabei ist der Ausgang des Generators der Referenzspannung an den Eingang des Inverters und den Eingang des binären Addiators gaschaltet, der Impulsformer ist an den Steuereingang der ersten Einrichtung der Auswahl und Speicherung geschaltet, deren Signaleingang an den Ausgang des Verstärkers gaschaltet, der auch an der Signaleingang der zweiten Einrichtung der Auswahl und Speicherung geschaltet ist, der Eingang des Niederfrequenzfilters ist an den Ausgang der ersten Einrichtung der Auswahl und Speicherung und sein Ausgang an den zweiten Eingang des Phasenkomparators geschaltet, der Ausgang des Detektors ist an den Eingang des Verstärkers gaschaltet.
